# EUROPÄISCHE PATENTSCHRIFT

(11) **EP 3 230 156 B1**
(45) Veröffentlichungstag und Bekanntmachung des Hinweises auf die Patenterteilung: **19.06.2019**
(21) Anmeldenummer: 15848163.0
(22) Anmeldetag: 09.12.2015
(51) Int. Cl.: B62M 3/06, B62M 11/14

(54) **GETRIEBE**
TRANSMISSION
TRANSMISSION

(30) Priorität: 12.12.2014 DE 102014018267
(43) Veröffentlichungstag der Anmeldung: 18.10.2017
(73) Patentinhaber: Möve Bikes GmbH, 99974 Mühlhausen (DE)
(72) Erfinder: SPRÖTE, Tobias, 99974 Mühlhausen (DE); BURRE, Dominik, 40211 Düsseldorf (DE); ROCHLITZER, Marcus, 99974 Mühlhausen (DE); LEGENMAJER, Julius, 07749 Jena (DE)
(74) Vertreter: Fritzsche, Thomas
(86) Internationale Anmeldenummer: PCT/EP2015/025098
(87) Internationale Veröffentlichungsnummer: WO 2016/096153

(56) Entgegenhaltungen:
- DE-B4-102010 033 211
- US-A- 4 309 043
- US-A1- 2007 234 846

## Beschreibung

Die Erfindung betrifft ein Getriebe gemäß den im Oberbegriff des Anspruchs 1 stehenden Merkmalen.

Derartige Getriebe können insbesondere in Fahrrädern verbaut sein und sorgen für eine Vergrößerung des Drehmomentes durch die vom Radfahrer eingeleitete Kraft. Bei dieser Anwendung wird das Gehäuse des Getriebes an einem Rahmenbauteil adaptiert und das Kraftübertragungsmittel, zum Beispiel ein Zahnkranz, überträgt das vom Radfahrer erzeugte Drehmoment über eine Kette auf das Hinterrad. Das erfindungsgemäße Getriebe kann jedoch ebenso beispielsweise an Windkraftanlagen mit senkrecht stehenden Rotationsachsen vorgesehen sein.

Einen gattungsgemäßen Stand der Technik bildet die
DE 10 2010 033 211 B4 mit einem Fahrradgetriebe, bei dem das Sonnenrad, das Planetenrad und die Triebkurbel innerhalb eines gemeinsamen Kurbelgehäuse angeordnet sind und sich der Kurbelarm mittels einer Führungsrolle an einer ebenfalls im Kurbelgehäuse angeordneten Führungsschiene abstützt. Die Triebkurbel greift von zwei Seiten an einem Kurbelarmkopf des Kurbelarmes an und nimmt dabei eventuell vorhandene Kippmomente auf. Die Führungsrolle dagegen läuft frei auf der Führungsschiene ab, da andernfalls die Lagerung des Kurbelarmkopfes überbestimmt wäre. Als nachteilig hat sich bei dem bekannten Getriebe herausgestellt, dass das Treten aufgrund der frei laufenden Führungsrolle als schwammig empfunden wird und außerdem die bekannte Bauweise mit einem zweiseitig gelagerten Kurbelarmkopf zu einem großen Q-Faktor führt. Der Q-Faktor bezeichnet beim Fahrrad den seitlichen Abstand der äußeren Flächen der beiden Tretkurbeln zueinander. Je größer der Q-Faktor ist, desto weiter sind die Pedale auseinander. Dies erhöht das Risiko, dass in engen und schnell gefahrenen Kurven das kurveninnere Pedal aufsetzt und ein zu großer Q-Faktor aus ergonomischer Sicht gesundheitsschädlich ist. Auch in anderen Bereichen der Technik ist es erstrebenwert, ein möglichst in axialer Richtung der Hauptwelle kompakt bauendes Getriebe realisieren zu können.

Folglich lag der Erfindung die Aufgabe zugrunde, ein Getriebe bereitzustellen, dass in axialer Richtung der Hauptwelle ein möglichst kompaktes Baumaß aufweist.

Die Aufgabe wird erfindungsgemäß mit den kennzeichnenden Merkmalen des Anspruchs 1 gelöst.

Unter einer Linearführung wird ein Maschinenelement verstanden, das eine möglichst reibungsfreie Translation einer oder mehrerer beweglicher Baugruppen einer Maschine ermöglicht und dabei gleichzeitig die Einhaltung der Bewegungsrichtung -einer linearen Bahn- garantiert. Dabei muss die Linearführung erfindungsgemäß auch vorhandene Kippmomente aufnehmen. Die an der Übertragung des Drehmoments beteiligten Komponenten wie Kurbelarm und Triebkurbel verändern dabei ihre Länge nicht, sondern verschwenken lediglich gegeneinander. Lagerachsen aller drehbar gelagerten Komponenten sind parallel zueinander ausgerichtet.

Vorteilhafterweise weist das Steuergehäuse einen Wandabschnitt auf, dessen Innenseite dem Sonnenrad sowie dem Planetenrad und dessen Außenseite der Triebkurbel zugewandt ist. Der Wandabschnitt ist als im Wesentlichen ebene Platte ausgeformt, wobei die Außenseite der Innenseite gegenüberliegt. Aufgrund des Wandabschnittes ist das Sonnen- und Planetenrad von der Triebkurbel getrennt. Hierdurch sind diese besonders günstig vor äußeren Einflüssen geschützt, wobei an dem Wandabschnitt zusätzlich noch eine Kapselung des Sonnen- und Planetenrades angreifen kann. Der Wandabschnitt trägt auch das Planetenrad, das in axialer Richtung den Wandabschnitt vollständig durchläuft.

Gemäß einer weiteren bevorzugten Ausgestaltung ist der Kurbelarm an der Triebkurbel mittels eines zweiten Drehlagers gelagert und liegt einseitig an der Triebkurbel an. Diese Ausführung begünstigt die angestrebten kompakten Abmessungen des Getriebes, da die Triebkurbel einseitig an dem Kurbelarm gelagert sein kann und keine gabelförmige Aufnahme zur beidseitigen Lagerung des Kurbelarmes vorhanden zu sein braucht.

Zweckmäßigerweise ist die Linearführung an der Außenseite des Wandabschnittes angeordnet. Somit dreht die Linearführung zusammen mit dem Steuergehäuse und ist in immer gleicher Position zu dem Kraftübertragungsmittel angeordnet. Die Anbringung der Linearführung an der Außenseite des Wandabschnittes trägt zusätzlich dazu bei, das Getriebe in axialer Richtung der Hauptwelle möglichst schmal zu bauen.

Das Kraftübertragungsmittel kann mindestens ein Zahnkranz sein. Im Falle einer Kettenschaltung eines Fahrrades können auch mehrere Zahnkränze mit unterschiedlichem Durchmesser in axialer Richtung versetzt zueinander vorgesehen sein. Anstelle eines Zahnkranzes können auch Riemenscheiben etc. zum Einsatz kommen.

Günstigerweise umfasst die Linearführung mindestens eine Führungsschiene mit einem darauf geführten Schlitten. Unter einer Führungsschiene werden lineare Trag- und Führungselemente verstanden, die einzeln oder paarig und parallel zueinander angeordnet sind. Der Schlitten ist im Betrieb unlösbar mit der mindestens einen Führungsschiene verbunden und an dieser geführt.

Es hat sich als besonders vorteilhaft herausgestellt, wenn die mindestens eine Führungsschiene und/oder der Schlitten in axialer Richtung des Zahnkranzes diesen zumindest teilweise überlappen oder hinter dem Zahnkranz in Richtung des Sonnenrades angeordnet sind. Insofern rückt/rücken die Führungsschiene und/oder der Schlitten in axialer Richtung in den mindestens einen Zahnkranz hinein, wodurch die Abmessung des Getriebes in axialer Richtung der Hauptwelle weiter verringert wird.

Alternativ oder ergänzend zu der vorstehenden Ausführungsform kann die mindestens eine Führungsschiene derart angeordnet sein, dass ein Abschnitt des Schlittens bei einer Umdrehung des Kurbelarmes zweimal eine Mittelachse der Hauptwelle überfährt. Der Schlitten oder zumindest ein Teil des Schlittens führt daher eine alternierende Bewegung um die in Verlängerung der Hauptwelle befindliche Mittelachse aus. Der auf der Führungsschiene zur Verfügung stehende Verfahrweg des Schlittens wird hierdurch in einen zentralen Bereich des Zahnkranzes verlegt. Diese Ausführungsform trägt dazu bei, dass die Führungsschiene auch in axialer Richtung in den Zahnkranz verlegt werden kann.

Gemäß einer ersten bevorzugten Ausführungsform umfasst das Schienenelement eine Führungsschiene und das Schlittenelement einen Schlitten, wobei der Schlitten auf der Führungsschiene mit einem Freiheitsgrad bewegbar ist. Als Freiheitsgrad wird die Zahl der voneinander unabhängigen und in diesem Sinne frei wählbaren Bewegungsmöglichkeiten eines Systems bezeichnet. Ein starrer Körper lässt sich im Raum in drei voneinander unabhängige Richtungen bewegen (Translation) und in drei voneinander unabhängigen Ebenen drehen (Rotation). Der Schlitten kann bei dieser Ausführungsform ausschließlich dem Verlauf der Führungsschiene folgen.

Gemäß einer zweiten, alternativen Ausführungsform umfasst das Schienenelement zwei Führungsschienen und das Schlittenelement einen Schlitten, wobei der Schlitten auf den Führungsschienen mit einem Freiheitsgrad bewegbar ist. Durch die Anwendung von zwei parallel verlaufenden Führungsschienen wird das Risiko eines Verklemmens oder Verkantens erheblich verringert.

Vorzugsweise ist der Schlitten zwischen den Führungsschienen angeordnet und stützt sich mit jeweils zwei Laufrollenpaaren an diesen ab, wobei die Laufrollenpaare jeweils zwei Laufrollen aufweisen, deren Querschnittsprofil komplementär zu dem Querschnittsprofil der zugehörigen Führungsschiene ausgeformt ist. Typischerweise sind die Laufrollen mit einem konvexen oder konkaven Querschnittsprofil ausgebildet. Aufgrund der Anordnung von jeweils zwei fluchtenden Laufrollen, wird besonders effektiv ein Kippmoment des Schlittens abgefangen.

Bei den vorstehend erläuterten beiden Ausführungsformen greift ein drittes Drehlager vorteilhafterweise an dem Schlitten und dem Kurbelarm unmittelbar an. Aufgrund einer rotatorischen Bewegung des an der Triebkurbel angelenkten Endes des Kurbelarmes ändert sich während des Betriebes permanent auch die Winkellage des gesamten Kurbelarmes zu dem Schlitten. Mit Hilfe des dritten Drehlagers ist der Schlitten von den Änderungen der Winkellage des Kurbelarmes entkoppelt.

Gemäß einer dritten, alternativen Ausführungsform sind zwei Führungsschienen und zwei Schlitten vorgesehen, wobei auf jeder Führungsschiene ein Schlitten befestigt ist.

Jeder Schlitten kann dabei auf der zugehörigen Führungsschiene mit einem Freiheitsgrad bewegbar sein. Dieses bedeutet, dass jeder der Schlitten auf ihrer zugehörigen Führungsschiene drehfest geführt ist.

Dieses wird zum Beispiel dadurch erreicht, dass die Führungsschiene und der Schlitten ein komplementär ausgeformtes Mehrkantprofil aufweisen. Ein besonders verklemmungsfreier Lauf lässt sich mit einem Polygonprofil erreichen.

Jeder der Schlitten kann auf der zugehörigen Führungsschiene mit zwei Freiheitsgraden bewegbar sein. In diesem Fall sollten die Schlitten auf ihrer zugehörigen Führungsschiene in Umfangsrichtung drehbar geführt sein, dass heißt, die Schlitten sitzen auf einer zylindrischen Führung.

Sofern zwei Schlitten an jeweils einer zugehörigen Führungsschiene zum Einsatz kommen, können die Schlitten mittels einer Traverse miteinander verbunden und das dritte Drehlager kann zwischen der Traverse und dem Kurbelarm angeordnet sein. Durch eine feste Verbindung der Schlitten mittels der Traverse stützten sich die Schlitten gegeneinander ab und sperren sich gegen ein Verdrehen um die jeweilige Führungsschiene.

Vorzugsweise ist/sind der/die Schlitten als Linearführungskugelumlaufelement oder Gleitlagerelement ausgebildet. Die Linearkugelumlaufelemente sind Kugellager mit einem axialen Kugelumlauf. Der Zweck dieses Linearführungskugelumlaufelementes ist nicht wie bei allen anderen Wälzlagern die Lagerung eines rotierenden Elementes, sondern die möglichst reibungsarme Führung der translativen, d. h. geradlinigen Bewegung eines Maschinenelements entlang der Führungsschiene. Die Linearführungskugelumlaufelemente weisen geringere Reibungsverluste auf als ein vergleichbar belastetes Gleitlager.

Insbesondere bei einem an einem Fahrrad montierten Getriebe ist es zweckmäßig, wenn an der Hauptwelle zwei Steuergehäuse angreifen, die in Umfangsrichtung um 180° zueinander versetzt angeordnet sind.

Zum besseren Verständnis wird die Erfindung nachfolgend anhand von sieben Figuren näher erläutert. Es zeigen die
- **Fig. 1:**: eine perspektivische Ansicht auf ein Getriebe mit zwei Steuergehäusen;
- **Fig. 2:**: einen Querschnitt durch das Getriebe;
- **Fig. 3:**: eine Seitenansicht auf eine Linearführung des Getriebes gemäß einer ersten Ausführungsform;
- **Fig. 4:**: eine perspektivische Ansicht auf eine Linearführung des Getriebes gemäß einer zweiten Ausführungsform;
- **Fig. 5:**: eine Seitenansicht auf eine Linearführung des Getriebes gemäß einer dritten Ausführungsform;
- **Fig. 6:**: eine Seitenansicht auf eine Linearführung des Getriebes gemäß einer vierten Ausführungsform und
- **Fig. 7:**: einen Querschnitt durch die Linearführung längs der Schnittebene A-A in Fig. 6.

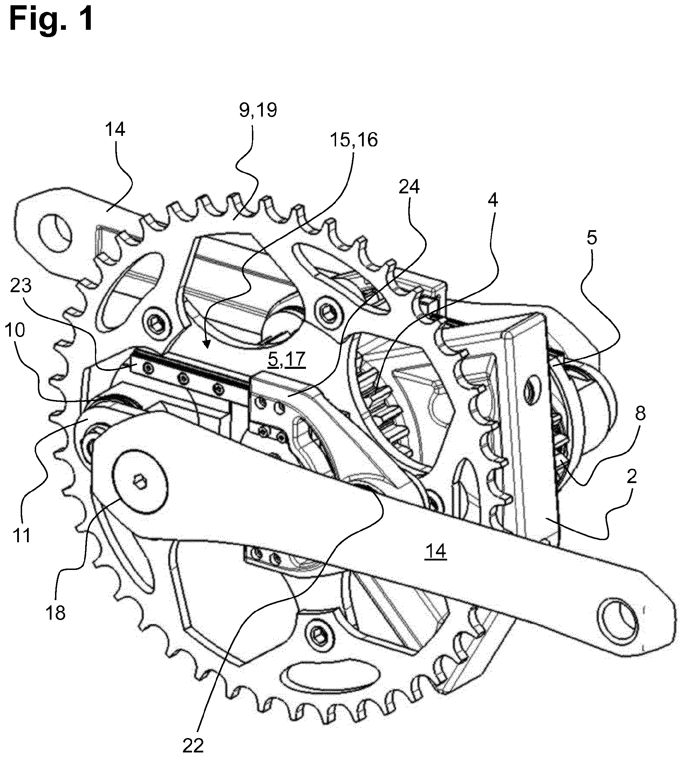

Die Fig. 1 zeigt eine perspektivische Ansicht auf das erfindungsgemäße Getriebe, das über ein Gehäuse 2 an einem nicht dargestellten Rahmen oder Träger befestigt werden kann. Das Getriebe ist beidseitig des Gehäuses 2 spiegelbildlich aufgebaut, mit dem einzigen Unterschied, dass an dem in der Bildebene vorne liegenden Abschnitt ein Kraftübertragungsmittel 9 in Form eines Zahnkranzes 19 vorhanden ist, der an einem Steuergehäuse 5 drehfest angebaut ist. Auf den Zahnkranz 19 kann beispielsweise eine nicht gezeigte Kette aufgelegt werden, die wiederum eine Drehbewegung des Steuergehäuses 5 und damit auch des Zahnkranzes 19 überträgt.

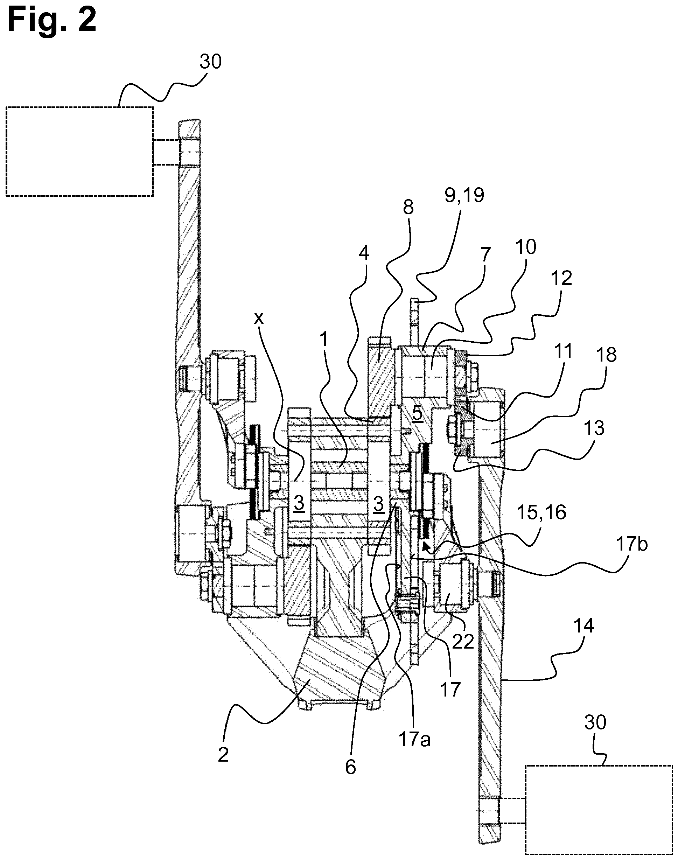

Durch das Gehäuse 2 verläuft eine im Querschnitt der Fig. 2 sichtbare Hauptwelle 1, die gegenüber dem Gehäuse 2 mit zwei in axialer Richtung zueinander beabstandeten Hauptwellenlagern 3 drehbar gelagert ist. Die Hauptwelle 1 ist an beiden Enden jeweils fest mit einem Steuergehäuse 5 verbunden.

An gegenüberliegenden Seiten des Gehäuses 2 ist außerdem jeweils ein Sonnenrad 4 befestigt. Beide Sonnenräder 4 umgeben die Hauptwelle 1 koaxial.

Das Steuergehäuse 5 ist mit seinem ersten Abschnitt 6 fest mit der Hauptwelle 1 verbunden und rotiert bei einer Betätigung eines oder beider Kurbelarme 14 um eine Mittelachse x der Hauptwelle 1. An einem dem ersten Abschnitt 6 gegenüberliegenden, zweiten Abschnitt 7 des Steuergehäuses 5 ist mittels eines ersten Drehlagers 10 ein Planetenrad 8 drehbar gelagert, welches sich in stetigem Wirkeingriff mit dem Sonnenrad 4 befindet und bei einer Bewegung der Kurbelarme 14 auf diesem abläuft. Das Planetenrad 8 durchragt in seiner axialen Erstreckung den zweiten Abschnitt 7 des Steuergehäuses 5 vollständig. Auf der dem Gehäuse 2 abgewandten Seite des Planetenrades 8 ist starr ein erstes Ende 12 einer Triebkurbel 11 befestigt, so dass die Triebkurbel 11 zusammen mit dem Planetenrad 8 um eine gemeinsame Achse rotiert. Der Kurbelarm 14 nimmt die Triebkurbel 11 mittels eines an einem zweiten Ende 13 daran angeordneten Drehlagers 18 mit.

Der Kurbelarm 14 ist ausschließlich auf der dem Steuergehäuses 5 zugewandten Seite gelagert.

Darüber hinaus stützt sich der Kurbelarm 14 drehbeweglich mittels eines dritten Drehlagers 22 an einem Kopplungsmittel 15 in Form einer Linearführung 16 ab. Die Linearführung 16 ist zentrisch innerhalb des Zahnkranzes 19 angeordnet und ermöglicht eine lineare Bewegung des Kurbelarmes 14, um einen Betrag entsprechend dem zweifachen Radius der Triebkurbel 11.

Das Steuergehäuse 5 umfasst mindestens einen im Wesentlichen senkrecht zur Mittelachse x stehenden Wandabschnitt 17, dessen Innenseite 17a zum Sonnenrad 4 sowie zum Planetenrad 8 gerichtet ist. Die gegenüberliegende Außenseite 17b des Wandabschnittes 17 ist benachbart zu der Triebkurbel 11 und dem Kurbelarm 14 angeordnet. Des Weiteren trägt der Wandabschnitt 17 auf seiner Außenseite 17b die Linearführung 16, welche unabhängig von ihrer konkreten Ausgestaltung mindestens eine Führungsschiene 23 umfasst. Die mindestens eine Führungsschiene 23 ist ortsfest an der Außenseite 17b des Wandabschnittes 17 des Steuergehäuses 5 befestigt, insbesondere durch Verschrauben oder Vernieten.

An den Enden beider Kurbelarme 14 sind in Fig. 2 beispielhaft Pedale 30 angeordnet, die jeweils von dem Getriebe wegweisen.

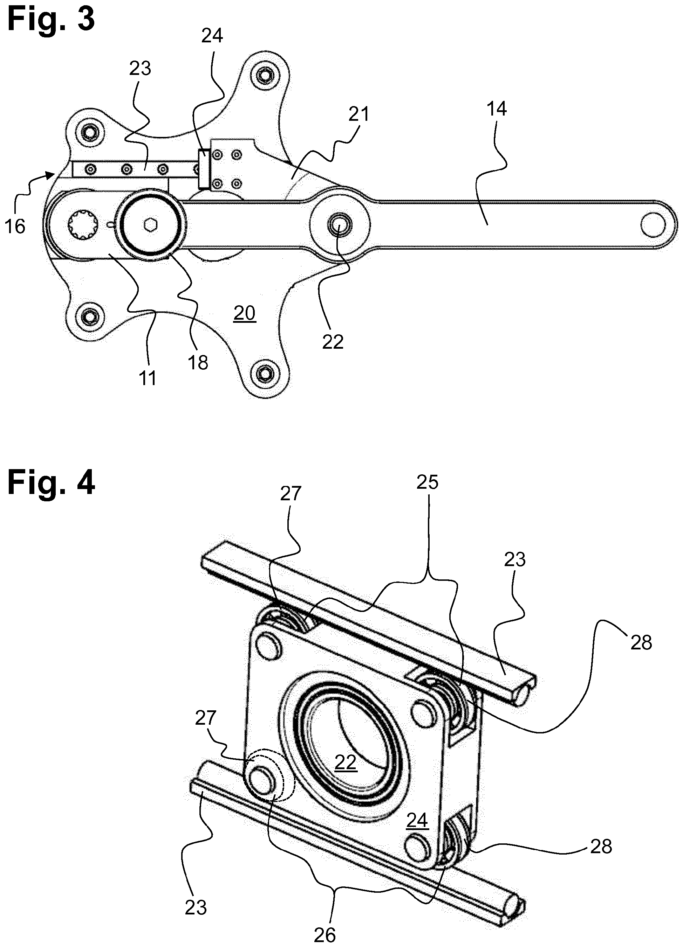

In den Figuren 3 bis 7 werden unterschiedliche Ausführungsformen von in dem erfindungsgemäßen Getriebe angeordneter Linearführungen 16 erläutert.

Die Fig. 3 zeigt eine erste Ausführungsform einer geeigneten Linearführung 16 mit einer einzigen Führungsschiene 23 und einem einzigen darauf angeordneten Schlitten 24. Die Führungsschiene 23 ist profiliert und teilweise von dem Schlitten 24 hintergriffen, so dass ein Ablösen des Schlittens 24 aus der Bildebene hinaus wirksam verhindert ist. Der Schlitten 24 hat gegenüber der Führungsschiene 23 einen Freiheitsgrad.

Die Führungsschiene 23 ist auf eine Montageplatte 20 aufgesetzt und mit dieser dauerhaft verbunden.

An dem Schlitten 24 ist an seinem der Führungsschiene 23 abgewandten Ende ein Schlittenarm 21 angeformt, der bis zu dem dritten Drehlager 22 verläuft. Der Schlittenarm 21 ist in Abhängigkeit der Triebkurbel 11 schräg zu dem Kurbelarm 14 ausgerichtet. In der gezeigten Darstellung der Fig. 3 fluchten die Triebkurbel 11 und der Kurbelarm 14 in einer horizontalen Achse und es kann ein maximales Drehmoment erzeugt werden.

Die Fig. 4 zeigt eine alternative Ausführungsform, bei welcher ein Schlitten 24 zwischen zwei parallelen Führungsschienen 23 gehalten und in deren axialer Richtung geführt ist. Der Schlitten 24 weist an seiner einen, der Führungsschiene 23 zugewandten Seite ein erstes Laufrollenpaar 25 und an der gegenüberliegenden Seite, ebenfalls benachbart zu der anderen Führungsschiene 23, ein zweites Laufrollenpaar 26 auf. Beide Laufrollenpaare 25, 26 besitzen jeweils eine erste Laufrolle 27 und eine zweite Laufrolle 28.

Die Führungsschienen 23 sind auf ihrer einander zugewandten Seite mit einem konvexen Querschnitt ausgebildet, auf welchem die Laufrollen 27 und 28, die in ihrer Umfangswand konkav ausgeformt sind, ablaufen. In gleicher Weise könnten die Führungsschienen 23 einen konkaven Querschnitt aufweisen und die Laufrollen 27, 28 mit einem konvexen Querschnitt ausgebildet sein.

In dem Schlitten 24 ist zentrisch das dritte Drehlager 22 zu erkennen, über welches der Schlitten 24 mit dem Kurbelarm 14 drehbar verbunden ist.

Durch die zwei hintereinander sitzenden Rollen 27, 28 eines Laufrollenpaares 25, 26 wird wirksam ein Kippen des Schlittens 24 um das dritte Drehlager 22 verhindert. Auch der Schlitten 24 gemäß Fig. 4 weist lediglich einen Freiheitsgrad auf.

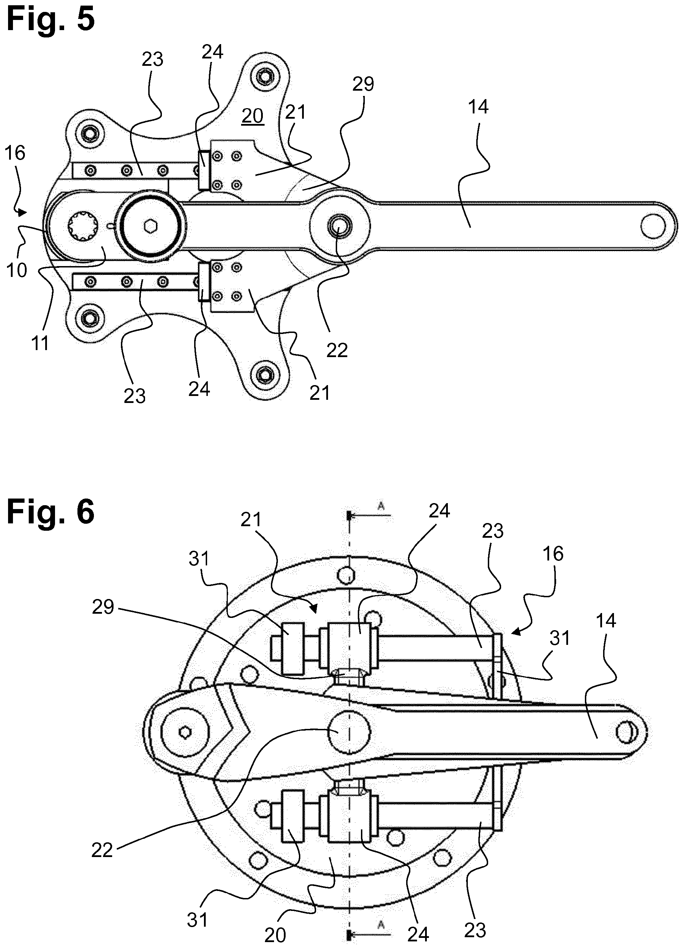

Die Fig. 5 zeigt eine weitere Ausführungsform, die prinzipiell der Ausführung in Fig. 3 nahekommt. Abweichend sind jedoch zwei parallele Führungsschienen 23 auf der Montageplatte 20 befestigt und auf jeder Führungsschiene 23 befindet sich ein Schlitten 24. An einem Ende der Führungsschienen 23 befindet sich zwischen diesen das erste Drehlager 10.

Die beiden Schlitten 24 weisen beide einen in Richtung des Kurbelarmes 14 schräg zulaufenden Schlittenarm 21 auf, wobei sich beide Schlittenarme 21 zu einer Traverse 29 vereinen. Im Bereich der Traverse 29 ist das dritte Drehlager 22 angeordnet. Jeder Schlitten 24 ist mit einem Freiheitsgrad gegenüber der zugehörigen Führungsschiene 23 bewegbar.

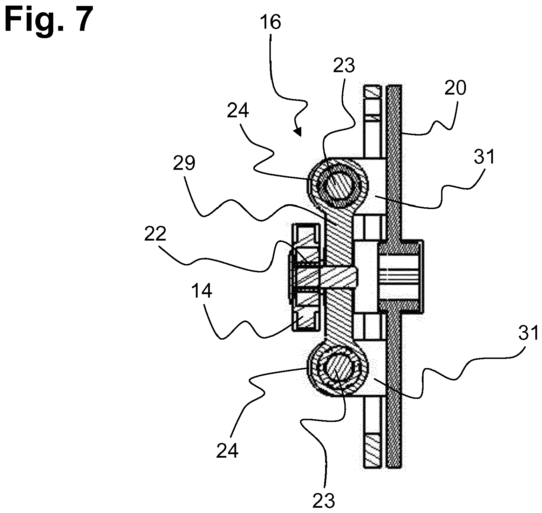

Die Fign. 6 und 7 stellen eine weitere Ausführungsform dar, bei welcher zwei zylindrische Führungsschienen 23 vorgesehen sind, auf die jeweils ein Schlitten 24 aufgeschoben ist. Die Führungsschienen 23 sind beabstandet zu der Montageplatte 20 mittels Halterungen 31 fixiert und in Umfangsrichtung vollständig von dem darauf geführten Schlitten 24 umschlossen. Somit hat jeder Schlitten 24 für sich genommen zwei Freiheitsgrade. Die Traverse 29 verbindet jedoch beide Schlitten 24 und verhindert dadurch eine Rotation eines einzelnen Schlittens 24 um die jeweilige Führungsschiene 23. Das dritte Drehlager 22 ist auch hier zwischen der Traverse 29 und dem Kurbelarm 14 angeordnet.

### Bezugszeichenliste

- 1: Hauptwelle
- 2: Gehäuse
- 3: Hauptwellenlager
- 4: Sonnenrad
- 5: Steuergehäuse
- 6: erster Abschnitt Steuergehäuse
- 7: zweiter Abschnitt Steuergehäuse
- 8: Planetenrad
- 9: Kraftübertragungsmittel
- 10: erstes Drehlager
- 11: Triebkurbel
- 12: erstes Ende Triebkurbel
- 13: zweites Ende Triebkurbel
- 14: Kurbelarm
- 15: bewegliches Kopplungsmittel
- 16: Linearführung
- 17: Wandanschnitt
- 17a: Innenseite Wandabschnitt
- 17b: Außenseite Wandabschnitt
- 18: zweites Drehlager
- 19: Zahnkranz
- 20: Montageplatte
- 21: Schlittenarm
- 22: drittes Drehlager
- 23: Führungsschiene
- 24: Schlitten
- 25: erstes Laufrollenpaar
- 26: zweites Laufrollenpaar
- 27: erste Laufrolle
- 28: zweite Laufrolle
- 29: Traverse
- 30: Pedal
- 31: Halterung

- x: Mittelachse

## Patentansprüche

1. Getriebe für ein System, bei dem eine gerichtete Kraft exzentrisch zu einer Hauptwelle (1) des Getriebes eingeleitet wird, umfassend die Hauptwelle (1), welche gegenüber einem feststehenden Gehäuse (2) mittels eines Hauptwellenlagers (3) drehbar gelagert ist, wobei konzentrisch um die Hauptwelle (1) ein fest mit dem Gehäuse (2) verbundenes Sonnenrad (4) angeordnet ist, und mindestens ein um das Gehäuse (2) rotierendes Steuergehäuse (5), dessen erster Abschnitt (6) drehfest an der Hauptwelle (1) angreift und an dessen zweitem Abschnitt (7) ein Planetenrad (8) mittels eines ersten Drehlagers (10) drehbar gelagert ist, welches das Sonnenrad (4) kämmt, **dadurch gekennzeichnet, dass** an dem Steuergehäuse (5) ein Kraftübertragungsmittel (9) befestigt ist und an dem Planetenrad (8) starr eine Triebkurbel (11) mit ihrem ersten Ende (12) angreift, wobei ein zweites Ende (13) der Triebkurbel (11) an einem Kurbelarm (14) drehgelenkig gelagert ist und der Kurbelarm (14) über ein bewegliches Kopplungsmittel (15) gegenüber dem Steuergehäuse (5) abgestützt ist, und das bewegliche Kopplungsmittel (15) eine Linearführung (16) ist, die von dem Kurbelarm (14) übertragene Kippmomente aufnimmt.

2. Getriebe nach Anspruch 1, **dadurch gekennzeichnet, dass** das Steuergehäuse (5) einen Wandabschnitt (17) aufweist, dessen Innenseite (17a) dem Sonnenrad (4) sowie dem Planetenrad (8) und dessen Außenseite (17b) der Triebkurbel (11) zugewandt ist.

3. Getriebe nach Anspruch 1 oder 2, **dadurch gekennzeichnet, dass** der Kurbelarm (14) an der Triebkurbel (11) mittels eines zweiten Drehlagers (18) gelagert ist und einseitig an der Triebkurbel (11) anliegt.

4. Getriebe nach Anspruch 2 oder 3, **dadurch gekennzeichnet, dass** die Linearführung (16) an der Außenseite (17b) des Wandabschnittes (17) angeordnet ist.

5. Getriebe nach einem der Ansprüche 1 bis 4, **dadurch gekennzeichnet, dass** das Kraftübertragungsmittel (9) mindestens ein Zahnkranz (19) ist.

6. Getriebe nach einem der Ansprüche 1 bis 5, **dadurch gekennzeichnet, dass** die Linearführung (16) mindestens eine Führungsschiene (23) mit einem darauf geführten Schlitten (24) umfasst,

7. Getriebe nach Anspruch 6, **dadurch gekennzeichnet, dass** die mindestens eine Führungsschiene (23) und/oder der Schlitten (24) in axialer Richtung des Zahnkranzes (19) diesen zumindest teilweise überlappen oder hinter dem Zahnkranz (19) in Richtung des Sonnenrades (4) angeordnet sind.

8. Getriebe nach Anspruch 6 oder 7, **dadurch gekennzeichnet, dass** die mindestens eine Führungsschiene (23) derart angeordnet ist, dass der Schlitten (24) bei einer Umdrehung des Kurbelarmes (14) zweimal eine Mittelachse (x) der Hauptwelle (1) überfährt.

9. Getriebe nach einem der Ansprüche 6 bis 8, **dadurch gekennzeichnet, dass** der Schlitten (24) auf der Führungsschiene (23) mit einem Freiheitsgrad bewegbar ist.

10. Getriebe nach einem der Ansprüche 6 bis 8, **dadurch gekennzeichnet, dass** zwei Führungsschienen (23) vorgesehen sind, wobei der Schlitten (24) auf den beiden Führungsschienen (23) jeweils mit einem Freiheitsgrad bewegbar ist.

11. Getriebe nach Anspruch 10, **dadurch gekennzeichnet, dass** der Schlitten (24) zwischen den Führungsschienen (23) angeordnet ist und sich mit jeweils zwei Laufrollenpaaren (25, 26) an diesen abstützt, wobei die Laufrollenpaare (25, 26) jeweils zwei Laufrollen (27, 28) aufweisen, deren Querschnittsprofil komplementär zu dem Querschnittsprofil der zugehörigen Führungsschiene (23) ausgeformt ist.

12. Getriebe nach einem der Ansprüche 9 bis 11, **dadurch gekennzeichnet, dass** ein drittes Drehlager (22) an dem Schlitten (24) und dem Kurbelarm (14) angreift.

13. Getriebe nach einem der Ansprüche 6 bis 8, **dadurch gekennzeichnet, dass** zwei Führungsschienen (23) und zwei Schlitten (24) vorgesehen sind.

14. Getriebe nach Anspruch 13, **dadurch gekennzeichnet, dass** jeder Schlitten (24) auf der zugehörigen Führungsschiene (23) mit einem Freiheitsgrad bewegbar ist.

15. Getriebe nach Anspruch 13, **dadurch gekennzeichnet, dass** jeder Schlitten (24) auf der zugehörigen Führungsschiene (23) mit zwei Freiheitsgraden bewegbar ist.

16. Getriebe nach einem der Ansprüche 13 bis 15, **dadurch gekennzeichnet, dass** die Schlitten (24) mittels einer Traverse (29) miteinander verbunden sind und ein drittes Drehlager (22) zwischen der Traverse (29) und dem Kurbelarm (14) angeordnet ist.

17. Getriebe nach einem der Ansprüche 6 bis 16, **dadurch gekennzeichnet, dass** der/die Schlitten (24) als Linearführungskugelumlaufelement oder Gleitlagerelement ausgebildet ist/sind.

18. Getriebe nach einem der Ansprüche 1 bis 17, **dadurch gekennzeichnet, dass** an der Hauptwelle (1) zwei Steuergehäuse (5) angreifen, die in Umfangsrichtung um 180° zueinander versetzt angeordnet sind.

## Claims

1. A transmission for a system, in which an oriented force is introduced eccentrically in relation to a main shaft (1) of the transmission, comprising the main shaft (1), which is rotatably mounted in relation to a fixed housing (2) by means of a main shaft bearing (3), wherein a sun gear (4) connected fixedly to the housing (2) is arranged concentrically around the main shaft (1), and at least one control housing (5) rotating around the housing (2), the first portion (6) of which engages in a rotationally-fixed manner on the main shaft (1) and on the second portion (7) of which a planet gear (8) is rotatably mounted by means of a first rotational bearing (10), which meshes with the sun gear (4),
**characterized in that** a force transmission means (9) is fastened on the control housing (5) and a drive crank (11) engages rigidly with its first end (12) on the planet gear (8), wherein a second end (13) of the drive crank (11) is mounted in a rotationally articulated manner on a crank arm (14) and the crank arm (14) is supported in relation to the control housing (5) via a movable coupling means (15),
and
the movable coupling means (15) is a linear guide (16), which absorbs the tilting torques transmitted by the crank arm (14).

2. The transmission according to claim 1, **characterized in that** the control housing (5) has a wall portion (17), the inner side (17a) of which faces toward the sun gear (4) and the planet gear (8) and the outer side (17b) of which faces toward the drive crank (11).

3. The transmission according to claim 1 or 2, **characterized in that** the crank arm (14) is mounted on the drive crank (11) by means of a second rotational bearing (18) and abuts the drive crank on one side (11).

4. The transmission according to claim 2 or 3, **characterized in that** the linear guide (16) is arranged on the outer side (17b) of the wall portion (17).

5. The transmission according to any one of claims 1 to 4, **characterized in that** the force transmission means (9) is at least one sprocket (19).

6. The transmission according to any one of claims 1 to 5, **characterized in that** the linear guide (16) comprises at least one guide rail (23) having a carriage (24) guided thereon.

7. The transmission according to claim 6, **characterized in that** the at least one guide rail (23) and/or the carriage (24) at least partially overlap the sprocket (19) in the axial direction thereof or are arranged behind the sprocket (19) in the direction of the sun gear (4).

8. The transmission according to claim 6 or 7, **characterized in that** the at least one guide rail (23) is arranged such that the carriage (24) passes over a center axis (x) of the main shaft (1) twice during one revolution of the crank arm (14).

9. The transmission according to any one of claims 6 to 8, **characterized in that** the carriage (24) is movable on the guide rail (23) with one degree of freedom.

10. The transmission according to any one of claims 6 to 8, **characterized in that** two guide rails (23) are provided, wherein the carriages (24) are each movable with one degree of freedom on the two guide rails (23).

11. The transmission according to claim 10, **characterized in that** the carriage (24) is arranged between the guide rails (23), and is supported on each of these with two pairs of rollers (25, 26), wherein the pairs of rollers (25, 26) each have two rollers (27, 28), the cross-sectional profile of which is shaped to complement the cross-sectional profile of the associated guide rail (23).

12. The transmission according to any one of claims 9 to 11, **characterized in that** a third rotational bearing (22) engages on the carriage (24) and the crank arm (14).

13. The transmission according to any one of claims 6 to 8, **characterized in that** two guide rails (23) and two carriages (24) are provided.

14. The transmission according to claim 13, **characterized in that** each carriage (24) is movable on the associated guide rail (23) with one degree of freedom.

15. The transmission according to claim 13, **characterized in that** each carriage (24) is movable on the associated guide rail (23) with two degrees of freedom.

16. The transmission according to any one of claims 13 to 15, **characterized in that** the carriages (24) are connected to one another by means of a traverse (29) and a third rotational bearing (22) is arranged between the traverse (29) and the crank arm (14).

17. The transmission according to any one of claims 6 to 16, **characterized in that** the carriage(s) (24) is/are designed as a linear guide recirculating ball bearing element or sliding bearing element.

18. The transmission according to any one of claims 1 to 17, **characterized in that** two control housings (5), which are arranged offset by 180° in relation to one another in the circumferential direction, engage the main shaft (1).

## Revendications

1. Transmission pour un système, dans lequel une force orientée est introduite de façon excentrique par rapport à un arbre principal (1) de la transmission, comprenant l'arbre principal (1), lequel est logé en rotation par rapport à un boîtier fixe (2) au moyen d'un palier d'arbre principal (3), dans laquelle une roue solaire (4) reliée fixement au boîtier (2) est agencée concentriquement autour de l'arbre principal (1), et au moins un boîtier de commande (5) tournant autour du boîtier (2), dont la première section (6) agit solidaire en rotation sur l'arbre principal (1) et au niveau de sa deuxième section (7), une roue planétaire (8) est logée en rotation au moyen d'un premier palier pivotant (10), lequel s'engrène avec la roue solaire (4),
**caractérisée en ce qu'**un moyen de transmission de force (9) est fixé au niveau du boîtier de commande (5) et une manivelle motrice (11) agit avec sa première extrémité (12) de manière rigide sur la roue planétaire (8), dans laquelle une deuxième extrémité (13) de la manivelle motrice (11) est logée par une articulation rotative au niveau d'un bras de manivelle (14) et le bras de manivelle (14) est soutenu par rapport au boîtier de commande (5) par le biais d'un moyen de couplage mobile (15),
et
le moyen de couplage mobile (15) est un guidage linéaire (16), qui reçoit des moments de basculement transmis par le bras de manivelle (14)

2. Transmission selon la revendication 1, **caractérisée en ce que** le boîtier de commande (5) présente une section de paroi (17), dont le côté intérieur (17a) est tourné vers la roue solaire (4) ainsi que vers la roue planétaire (8) et dont le côté extérieur (17b) est tourné vers la manivelle motrice (11).

3. Transmission selon la revendication 1 ou 2, **caractérisée en ce que** le bras de manivelle (14) est logé au niveau de la manivelle motrice (11) au moyen d'un deuxième palier pivotant (18) et s'applique sur un côté sur la manivelle motrice (11).

4. Transmission selon la revendication 2 ou 3, **caractérisée en ce que** le guidage linéaire (16) est agencé au niveau du côté extérieur (17b) de la section de paroi (17).

5. Transmission selon l'une quelconque des revendications 1 à 4, **caractérisée en ce que** le moyen de transmission de force (9) est au moins une couronne dentée (19).

6. Transmission selon l'une quelconque des revendications 1 à 5, **caractérisée en ce que** le guidage linéaire (16) comprend au moins un rail de guidage (23) avec un coulisseau (24) guidé dessus.

7. Transmission selon la revendication 6, **caractérisée en ce que** l'au moins un rail de guidage (23) et/ou le coulisseau (24) chevauchent dans la direction axiale de la couronne dentée (19) au moins en partie celle-ci ou sont agencés derrière la couronne dentée (19) en direction de la roue solaire (4).

8. Transmission selon la revendication 6 ou 7, **caractérisée en ce que** l'au moins un rail de guidage (23) est agencé de sorte que le coulisseau (24) parcourt deux fois un axe médian (x) de l'arbre principal (1) lors d'une rotation du bras de manivelle (14).

9. Transmission selon l'une quelconque des revendications 6 à 8, **caractérisée en ce que** le coulisseau (24) est déplaçable sur le rail de guidage (23) avec un degré de liberté.

10. Transmission selon l'une quelconque des revendications 6 à 8, **caractérisée en ce que** deux rails de guidage (23) sont prévus, dans laquelle le coulisseau (24) est déplaçable sur les deux rails de guidage (23) respectivement avec un degré de liberté.

11. Transmission selon la revendication 10, **caractérisée en ce que** le coulisseau (24) est agencé entre les rails de guidage (23) et s'appuie sur ceux-ci avec respectivement deux paires de roulettes (25, 26), dans laquelle les paires de roulettes (25, 26) présentent respectivement deux roulettes (27, 28), dont le profil en section transversale est formé de manière complémentaire au profil en section transversale du rail de guidage (23) correspondant.

12. Transmission selon l'une quelconque des revendications 9 à 11, **caractérisée en ce qu'**un troisième palier pivotant (22) agit sur le coulisseau (24) et le bras de manivelle (14).

13. Transmission selon l'une quelconque des revendications 6 à 8, **caractérisée en ce que** deux rails de guidage (23) et deux coulisseaux (24) sont prévus.

14. Transmission selon la revendication 13, **caractérisée en ce que** chaque coulisseau (24) est déplaçable sur le rail de guidage (23) correspondant avec un degré de liberté.

15. Transmission selon la revendication 13, **caractérisée en ce que** chaque coulisseau (24) est déplaçable sur le rail de guidage (23) correspondant avec deux degrés de liberté.

16. Transmission selon l'une quelconque des revendications 13 à 15, **caractérisée en ce que** les coulisseaux (24) sont reliés les uns aux autres au moyen d'une traverse (29), et un troisième palier pivotant (22) est agencé entre la traverse (29) et le bras de manivelle (14).

17. Transmission selon l'une quelconque des revendications 6 à 16, **caractérisée en ce que** le/les coulisseaux (24) est/sont réalisé/s en tant qu'élément à circulation de billes de guidage linéaire ou d'élément de palier lisse.

18. Transmission selon l'une quelconque des revendications 1 à 17, **caractérisée en ce que** deux boîtiers de commande (5), qui sont agencés décalés l'un par rapport à l'autre de 180° dans la direction circonférentielle, agissent sur l'arbre principal (1).
